# EUROPÄISCHE PATENTANMELDUNG

(11) **EP 1 202 073 A2**
(43) Veröffentlichungstag der Anmeldung: **02.05.2002**
(21) Anmeldenummer: 01122687.5
(22) Anmeldetag: 01.10.2001
(51) Int. Cl.: G01S 3/783, G01S 3/781

(54) **Anordnung zur Bestimmung der Position einer Lichtquelle**

(30) Priorität: 23.10.2000 DE 10052424
(71) Anmelder: Astrium GmbH, 81663 München (DE)
(72) Erfinder: Lange, Günther, Dr., 85658 Egmating (DE); Rieger, Rolf, Dr., 85560 Ebersberg (DE)
(74) Vertreter: Ulrich, Thomas

(57) **Zusammenfassung**

Beschrieben wird eine Anordnung zur Bestimmung der Position einer Lichtquelle mit einer lichtempfindlichen Detektoreeinrichtung (1) und einer Anordnung (2) zur Abschattung eines Teils des auf die Detektoreinrichtung (1) auffallenden Lichts der Lichtquelle, wobei die Anordnung (2) zur Abschattung durch mindestens einen rotationssymmetrischen Körper gebildet wird. Eine Anwendung der Erfindung ist in Sonnensensoren von Raumfahrzeugen gegeben.

## Beschreibung

Die vorliegende Erfindung betrifft eine Anordnung zur Bestimmung der Position einer Lichtquelle.

Aus dem Stand der Technik sind bereits vielfach solche Anordnungen bekannt. So offenbart beispielsweise DE 42 14 136 die Verwendung eines Rechteckspalts, durch den das Licht der Lichtquelle auf eine Detektorzeile fällt. Aus den Bereichen, in denen das Licht der beiden Schenkel des Spalts auf die Detektorzeile fällt, kann der Einfallswinkel des Lichts und damit die Position der Lichtquelle relativ zur Messanordnung bestimmt werden. Es ist mit einer solchen Anordnung eine zweiachsige Messung möglich.

JP 6 106 6117 beschreibt die Verwendung einer zweidimensionalen Detektormatrix, durch die das durch einen einzelnen Spalt einfallende Licht erfasst wird und daraus ebenfalls der Einfallswinkel bestimmt wird. Diese Anordnung ermöglicht lediglich eine einachsige Messung.

DE 198 38 460 zeigt die Verwendung einer Schattenmaske, die auf einer Detektorzeile oder Detektormatrix eine oder mehrere Licht-Schatten-Grenzen erzeugt, wodurch eine einachsige oder zweiachsige Messung der Einfallswinkel des Lichts ermöglicht wird.

US 5,640,241 verwendet unter anderem eine zweidimensionale Detektormatrix, auf die durch einen Kreuzspalt Licht auf die Detektormatrix fällt, was eine zweiachsige Messung des einfallenden Lichts erlaubt.

US 5,499,098 dagegen zeigt die Verwendung von Detektorzeilen oder einer Detektormatrix, auf die das Licht einer Lichtquelle fällt, das teilweise durch eine Anordnung abgeschattet wird, die in einer Ebene vor dem jeweiligen Detektor angeordnet ist. Diese Anordnung ist dabei durch einen transparenten Film oder eine transparente Platte gebildet, der bzw. die in gewissen Breichen eine lichtundurchlässige Struktur aufweist. Der auftreffende Schattenwurf der Struktur dient zur Ermittlung der Einfallsrichtung des Lichts.

Nachteilig an diesem Stand der Technik ist, dass die Abbildung der Anordnungen, die das einfallende Licht zu den Detektorelementen durchlassen bzw. einen Schatten auf die Detektoreinrichtungen werfen, von dem Einfallswinkel des einfallenden Lichts abhängen. Es kann somit gerade bei relativ großen Abweichungen des Einfallswinkels von der Normalen zu der Detektorebene zu starken Verzerrungen der Abbildung und damit zu Messungenauigkeiten kommen.

Aufgabe der vorliegenden Erfindung ist es daher, eine Anordnung zur Bestimmung der Position einer Lichtquelle bereitzustellen, die unabhängig vom Einfallswinkel des einfallenden Lichts eine gleichbleibende Messgenauigkeit liefert.

Diese Aufgabe wird gelöst durch die Merkmale des Patentanspruchs 1.

Bei der erfindungsgemäßen Anordnung zur Bestimmung der Position einer Lichtquelle ist eine lichtempfindliche Detektoreeinrichtung sowie eine Anordnung zur Abschattung eines Teils des auf die Detektoreinrichtung auffallenden Lichts der Lichtquelle vorgesehen, welche in einer von der Detektoreinrichtung beabstandeten Ebene angeordnet ist. Erfindungsgemäß ist nun vorgesehen, dass die Anordnung zur Abschattung durch mindestens einen rotationssymmetrischen Körper gebildet wird. Damit ist gewährleistet, dass die Abbildung des Körpers unabhängig vom Einfallswinkel des auftreffenden Lichts ist.

Die Anordnung kann grundsätzlich einen beliebigen Durchmesser aufweisen, solange eine eindeutige Abbildung unter den gewünschten Winkelbereichen auf der Detektoreinrichtung möglich ist. Bevorzugt wird aber ein Körper mit geringem Durchmesser verwendet, um eine möglichst feine Auflösung zu erreichen und möglichst weite Winkelbereiche des Einfallswinkels abzudecken. So kann zur Abschattung insbesondere ein Draht oder ein ähnlich feiner Körper verwendet werden. In diesem Fall kann es genügen, zur eindimensionalen, einachsigen Bestimmung des Einfallswinkels die Detektoreinrichtung als eindimensionale Detektorzeile vorzusehen.

Soll eine zweiachsige Messung der Einfallswinkel des Lichts erfolgen, so muss die Anordnung zur Abschattung eine zweidimensionale Ausdehnung aufweisen. Insbesondere kann vorgesehen werden, dass die Anordnung aus kreuzförmig in der Ebene angeordneten, rotationssymetrischen Körpern gebildet ist. Auch hier kann bei grundsätzlich beliebigem Durchmesser der Körper bevorzugt vorgesehen werden, dass die Anordnung zur Abschattung durch kreuzförmig in der Ebene angeordnete Körper mit möglichst geringem Durchmesser wie beispielsweise durch Drähte gebildet wird. Zur zweiachsigen Messung ist die die Detektoreinrichtung als zweidimensionale Detektormatrix ausgebildet.

Eine Anwendung der vorstehenden Anordnungen findet sich in einem Sonnensensor zur Bestimmung des Einfallswinkels des Sonnenlichts, wie er beispielsweise in der Raumfahrttechnik zur Bestimmung der relativen Lage eines Raumfahrzeuges zur Sonne verwendet wird.

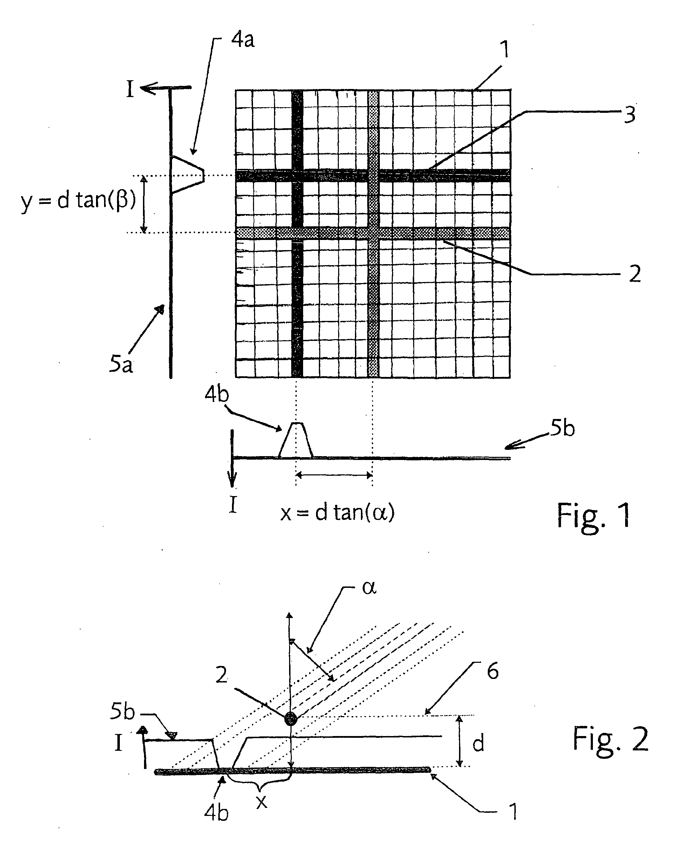

Spezielle Ausführungsbeispiele der vorliegenden Erfindung werden nachfolgend anhand der Figuren 1 und 2 erläutert.

Es zeigen:
- Fig. 1: zweiachsig messende Anordnung mit kreuzförmig angeordneten Drähten zur Abschattung,
- Fig. 2: Seitenansicht einer einachsig messenden Anordnung.

Fig. 1 zeigt eine zweidimensionale Detektormatix 1, die beispielsweise durch einen CCD-Detektor realisiert werden kann. Dieser misst zeilenweise und spaltenweise die Verteilungen 5a, 5b der Intensität I des einfallenden Lichts entlang der Zeilen und Spalten der Detektormatrix 1. Die Ausdehnung der einzelnen Detektorelemente und damit die Breite einer Detektorzeile oder -spalte wurde nur schematisch angedeutet und kann je nach Bedarf der Messgenauigkeit entsprechend angepasst, insbesonder zur Erzielung einer höheren Messgenauigkeit verkleinert werden. Durch kreuzförmig in einer Ebene von der Detektormatrix 1 beabstandete Drähte 2 wird ein Schattenwurf 3 auf der Detektormatrix erzeugt. Die Drähte 2 sind dabei beispielsweise mittig zu den Zeilen bzw. Spalten der Detektormatrix 1 angeordnet, d.h. der Kreuzungspunkt der Drähte 2 befindet sich über der Mitte der Detektormatrix 1. Entsprechend den Einfallswinkeln α, β des Lichts relativ zur Normalen der Detektormatrix 1 (siehe dazu Fig. 2) erfolgt der Schattenwurf 3 der Drähte 2 nicht mittig zu den Zeilen und Spalten der Detektormatrix, sondern entsprechend verschoben. Der Ort des Auftreffens des Schattens 3 auf die Detektorzeilen oder -spalten wird aus der dort gemessenen verringerten Intensität 4a, 4b des auftreffenden Lichts gestimmt. Aus der Abweichung x, y des Schattenwurfs von der Mitte der Detektorzeile bzw. Spalte und dem bekannten Abstand d der Ebene 6 der Drähte2 von der Detektormatrix 1 kann der Einfallswinkel α, β des Lichts in Zeilenrichtung bzw. Spaltenrichtung aus x=d·tan(α) und y=d·tan(β) bestimmt werden.

In Fig. 2 ist die Situation einer einachsigen Messung in einer Seitenansicht dargestellt, wobei Fig. 2 auch einer Seitenansicht der Fig. 1 für einen der beiden Drähte 2 entspricht. Es ist dort ein in einer Ebene im Abstand d von der Detektoreinrichtung 1 angeordneter Draht 2 dargestellt, dessen Schatten auf die Detektoreinrichtung fällt, die für eine rein einachsige Messung als Detektorzeile, für eine zweiachsige Messung als Detektormatrix ausgebildet ist. Die Verteilung 5b der Intensität I des einfallenden Lichts weist entlang der Detektoreinrichtung 1 im Auftreffpunkt des Schattens 3 ein Minimum 4b auf, das die Lage des Schattenwurfs 3 bestimmt. Mit der o.g. Formel kann aus dem Abstand d des Drahtes 2 von der Detektoreinrichtung 1 und der Abweichung x des Schattenwurfs vom Punkt der senkrechten Projektion des Drahtes 2 auf die Detektoreinrichtung 1 der Einfallswinkel bestimmt werden.

Nachdem die Drähte rotationssymmetrisch sind, ergeben sich keinerlei Veränderungen der Abbildung des Drahtes auf der Detektoreinrichtung, solange das einfallende Licht durch hinreichend parallele Strahlen gebildet wird. Dies ist insbesondere dann gegeben, wenn der Einfallswinkel des Sonnenlichts bestimmt wird, z.B. in Sonnensensoren, die in der Raumfahrttechnik Anwendung finden.

## Patentansprüche

1. Anordnung zur Bestimmung der Position einer Lichtquelle mit
- einer lichtempfindlichen Detektoreeinrichtung (1)
- einer Anordnung (2) zur Abschattung eines Teils des auf die Detektoreinrichtung (1) auffallenden Lichts der Lichtquelle, die in einer von der Detektoreinrichtung (1) beabstandeten Ebene (6) angeordnet ist,
**dadurch gekennzeichnet,**
**dass** die Anordnung (2) zur Abschattung durch mindestens einen rotationssymmetrischen Körper gebildet wird.

2. Anordnung nach Anspruch 1, **dadurch gekennzeichnet, dass** die Anordnung (2) zur Abschattung als Draht ausgebildet ist.

3. Anordnung nach Anspruch 2, **dadurch gekennzeichnet, dass** die Detektoreinrichtung (1) als eindimensionale Detektorzeile ausgebildet ist.

4. Anordnung nach Anspruch 1, **dadurch gekennzeichnet, dass** die Anordnung (2) zur Abschattung aus kreuzförmig in der Ebene (6) angeordneten, rotationssymetrischen Körpern gebildet ist.

5. Anordnung nach Anspruch 4, **dadurch gekennzeichnet, dass** die Anordnung (2) zur Abschattung durch kreuzförmig in der Ebene (6) angeordnete Drähte gebildet wird.

6. Anordnung nach Anspruch 5, **dadurch gekennzeichnet, dass** die Detektoreinrichtung (1) als zweidimensionale Detektormatrix ausgebildet ist.

7. Sonnensensor zur Bestimmung des Einfallswinkels des Sonnenlichts, aufweisend eine Anordnung nach einem der Ansprüche 1 bis 6.
